Europäisches Patentamt

(19) European Patent Office

Office européen des brevets

(11) Publication number: **0 203 734**
**B1**

## (12) EUROPEAN PATENT SPECIFICATION

(45) Date of publication of the patent specification:
16.08.89

(51) Int. Cl.⁴: **C 05 G 3/00**

(21) Application number: **86303293.4**

(22) Date of filing: **30.04.86**

(54) **Methods and compositions for increasing plant growth.**

(30) Priority: **02.05.85 US 729838**

(43) Date of publication of application:
**03.12.86 Bulletin 86/49**

(45) Publication of the grant of the patent:
**16.08.89 Bulletin 89/33**

(84) Designated Contracting States:
**AT BE CH DE FR GB IT LI LU NL SE**

(56) References cited:
**EP-A- 0 122 013**
**DE-B- 1 041 508**
**US-A- 3 029 140**
**US-A- 3 547 613**

**CHEMICAL ABSTRACTS, vol. 73, 1970, page 264,
abstract no. 3114h, Columbus, Ohio, US; A.I.
MOSOLOVA: "Effect of polymers (Krilium) on some
physical and chemical properties of sod-podzolic soil
and barley crops", & BIOL. NAUKI 1970, (2), 100-6**

(73) Proprietor: **CALGON CORPORATION,
Route 60-Campbell's Run Road, Robinson Township
Pennsylvania 15205 (US)**

(72) Inventor: **Gill, Jasbir S., 123 Darnley Drive, Coraopolis
Pennsylvania 15108 (US)**

(74) Representative: **Crampton, Keith John Allen et al, D
YOUNG & CO 10 Staple Inn, London WC1V 7RD (GB)**

## Description

This invention relates to methods and compositions for increasing plant growth.

Fertilizers are added to soil to enrich or replenish chemical nutrients in the soil, such nutrients being vital to plant growth. A soil may be naturally lacking in a needed chemical nutrient, or the deficiency may be due to the taking of chemicals by crops previously grown. In either case, the use of fertilizers increases productivity, as measured by ratios such as yield per hectare or yield per man hour. Additionally, the use of fertilizers enables soil to be used continuously, since artificial addition of needed components to nutrient-depleted soils makes it unnecessary to allow for natural replenishment of these components by the soil's lying fallow.

The fact that crops deplete key chemical elements from soil is well known. Generally, plants obtain all nutrients from soil, with the exception of carbon, oxygen and hydrogen. Typical soil-based nutrients essential to plant growth include nitrogen, silicon, magnesium, oxides of iron and calcium, chlorides, sulphates, magnesia, phosphates, soda and potash. Accordingly typical fertilizers include nitrogen fertilizers, such as sodium nitrate ($NaNO_3$), ammonium sulphate [$(NH_4)_2SO_4$], calcium nitrate [$(CaNO_3)_2$], ammonium nitrate ($NH_4NO_3$), urea [$CO(NH_2)_2$], and liquid nitrogen fertilizers, including anhydrous ammonia and aqueous ammonia; phosphate fertilizers, such as apatites [$Ca_5(PO_4)_3R$, where R is OH, $CO_3$, Cl or F], inorganic polyphosphates, tricalcium phosphate [$Ca_3(PO_4)_2$], dicalcium phosphate ($CaHPO_4$), monocalcium phosphate [$Ca(H_2PO_4)_2$, also called single superphosphate], iron phosphates, aluminium phosphates, orthophosphoric acid and nitrophosphates; potassium fertilizers, such as potassium sulphate ($K_2SO_4$), potassium nitrate ($KNO_3$), potassium chloride and potash; and combinations of nitrogen, phosphate and potassium fertilizers which, according to traditional fertilizer nomenclature, are designated as percent N - percent $P_2O_5$ - percent $K_2O$. Thus, many combinations are possible. For example, typical products are 20-20-0, 15-15-15, 10-34-0, 13-13-13, 12-57-0, 28-28-0, and 19-19-19. Additionally, secondary nutrients may be added to fertilizer compositions as required. Secondary nutrients include boron, copper, iron, manganese, molybdenum, zinc and magnesium.

As used herein the term «soil» refers to the surface layer of the earth in which plants grow. This definition encompasses all types of soil, including, inter alia, sandy soil, clay soils and topsoils.

As used herein, the term «fertilizer» is defined as a material or combination of materials which is added to soil to improve the rate of growth or health of plants, or the yield of plant fruits.

The term «phosphate fertilizer», as used herein, includes all fertilizers containing a source of phosphate ions.

It has now unexpectedly been discovered that the addition of certain scale-inhibiting compounds to soil in conjunction with phosphate fertilizers greatly enhances the effectiveness of the phosphate fertilizers.

The scale-inhibiting compounds inhibit the precipitation of scale-forming salts in aqueous systems. Scale-forming salts include calcium carbonate, calcium sulphate, calcium phosphate, calcium phosphonate, calcium oxalate, calcium fluoride, barium sulphate and magnesium salts.

The present invention provides a method of enhancing the efficacy of a phosphate fertilizer and increasing the availability of other soil nutrients, comprising adding to the fertilizer one or more of the following scale-inhibiting compounds, viz. polyacrylic acid, polymers comprising acrylic acid and 2-acrylamido-2-methylpropylsulphonic acid (AMPS) or 2-methacrylamido-2-methylpropylsulphonic acid (MAMPS), polymers comprising methacrylic acid and AMPS or MAMPS, polymers comprising acrylic acid and a hydroxyalkyl acrylate and polymers comprising methacrylic acid and a hydroxyalkyl acrylate.

The present invention also provides a composition comprising a phosphate fertilizer and one or more scale-inhibiting compounds as defined above.

The present invention also provides a method of improving the growth of plants comprising adding to the soil in which the plants are growing, separately or in combination, a phosphate fertilizer and a scale-inhibiting compound as defined above.

The use of the defined scale-inhibiting compounds in accordance with the present invention produces unexpected results in terms of stimulated and increased plant growth; thus, benefits associated with the invention include higher yield per hectare, higher yield per man hour, higher yield per kilogram of fertilizer and reduced fertilizer consumption. Health of the plants can also be improved.

The key to this invention relates to the availability of fertilizer nutrients to plants. It is estimated that a maximum of approximately 20 percent of a fertilizer added to soil becomes available to plants. For example, it is known that a major portion of phosphate fertilizers is precipitated as insoluble inorganic salts such as calcium phosphate, zinc phosphate, or salts of phosphate and other ions present in the soil. These precipitated insoluble salts are of limited value to plants. It is also known that the type of soil used and soil pH affect the availability of specific fertilizers to plants. The scale inhibitors of the invention, when added to fertilizers, inhibit the precipitation of insoluble inorganic salts, which occurs when the fertilizer dissolves in water from irrigation or rain and comes into contact with ions present in the soil. By inhibiting precipitation of these insoluble salts, more fertilizer becomes available to the plants. Additionally, other nutrients, such as ions of zinc, calcium, barium and magnesium, become available to the plants.

An effective amount of a scale-inhibiting compound should be added to the fertilizer for one-step application of the fertilizer/scale inhibitor composition, or these components can be added separately to the soil. The term 'effective amount' means that quantity of scale-inhibiting compound that, when added to soil, aids in preventing the formation and precipitation of insoluble salts in the soil under growing conditions. Generally, at least 0.001 part scale inhibitor must be added for each part fertilizer, by weight. The ratio of scale inhibitor to fertilizer may be as high as 1000:1, on a weight basis. The preferred ratio by weight of scale inhibitor to fertilizer ranges from 100:1 to 1:100, particularly 10:1 to 1:10. Based on the soil being treated, the scale inhibitors should be added at a dosage of at least 0.1 ppm, based on total dry soil weight, preferably 0.1 ppm - 100 ppm.

The molecular weight of the scale-inhibiting polymers used in accordance with the invention is not critical. It is preferably in excess of 500, particularly from 500-100,000 and especially from 500-25,000, as determined by light scattering techniques.

The phosphate fertilizers and scale inhibiting compounds may be added to the soil in combination or separately.

Any technique of application commonly known and used in the art can be utilized. For example, dry compositions of fertilizer and scale inhibitor can be mixed and applied directly to the soil, liquid compositions of the scale inhibitor and fertilizer can be prepared by diluting each component in an aqueous solution and combining them, or the scale inhibitor and fertilizer can be added to the soil separately by any suitable means.

The amount of scale inhibitor added to the soil depends on the amount of phosphate fertilizer added to the soil, which in turn is defined by soil conditions. Thus the fertilizer is chosen depending on soil deficiencies. An effective amount of a scale inhibitor is then added to the soil, either separately or in combination with the chosen fertilizer.

The scale inhibitors are especially effective enhancers of phosphate fertilizers, because it has been discovered that scale inhibitors increase the availability of phosphorus ions in soil for root uptake by plants. The resulting increased uptake of phosphorus ions by plants greatly improves their growth without increasing fertilizer dosages.

The scale-inhibiting compounds also incresae the availability of other plant nutrients, e.g. boron, copper, iron, manganese, molybdenum, zinc and magnesium.

The term 'synergistic', as used herein, means that the effectiveness of a composition comprising a phosphate fertilizer and a scale inhibitor is substantially greater than the sum fertilizer efficacy alone with that of the scale inhibitor alone.

*Examples*

The following examples further illustrate but do not limit the instant invention.

*Examples 1-9*

Examples 1-9 demonstrate the synergism between a phosphate fertilizer and an acrylic acid/2-acrylamidomethylpropylsulphonic acid scale inhibitor in terms of crop growth.

Different crops were grown, under control conditions, using a phosphate fertilizer alone and using a phosphate fertilizer in combination with 60/40 AA/AMPS, which is a copolymer of 60% acrylic acid and 40% 2-acrylamido-2-methylpropylsulphonic acid by weight, having a molecular weight of approximately 8200, as determined by low angle light scattering, which is commercially available from Calgon Corporation, Pittsburgh, Pennsylvania. The results of Examples 1-9 are shown in Table 1 below.

TABLE 1

| Experiment Number | Crop | Measurement | Fertilizer Only (30 ppm Phosphorous) | AA/AMPS only (75 ppm) | AA/AMPS plus Phosphorous (75 ppm/ 30 ppm) | Percent[3] Improvement |
|---|---|---|---|---|---|---|
| 1 | Rape | Harvest Weight | .21 g | .04 | 0.53 g | 152.0 |
| 2 | Soy Beans | Harvest Weight | 2.2 g | 2.2 g | 4.3 g | 95.5 |
| 3 | Alfalfa | Height, 70 days | 10.9 cm | 15.0 cm | 16.1 cm | 47.7 |
| 4 | Wheat | Height, 26 days and Berries per Head | 21.1 cm 14.8 | 19.0 cm 5.2 | 21.4 cm 15.3 | 1.4 3.4 |
| 5 | Seedling Grass | Harvest Weight | 1.72 g | 1.0 g | 2.0 g | 16.3 |
| 6 | Turf | Seed Heads per Flat | 12 | 14 | 58 | 383.3 |
| 7 | Radish (9 treatments) | Harvest Weight | negative | — | negative | — |
| 8[1] | Radish (16 treatments) | Height, 42 days | 4.28 cm | 4.13 cm | 5.53 cm | 29.2 |
| 9[2] | Radish (25 treatments) | Harvest Weight | .43 g | 0.48 g | 1.37 g | 218.6 |

[1] In Experiment 8, 40 ppm of phosphorus fertilizer was used alone and in combination with 75 ppm AA/AMPS.
[2] In Experiment 9, 30 ppm of phosphorus fertilizer was used, alone and in combination with 100 ppm AA/AMPS.
[3] Percent improvement shows increase of AA/AMPS plus phosphorous over phosphorous alone.

*Examples 10-21*

In Examples 10-21, the leaching of phosphorus from soil containing different amounts of added phosphate was measured. These tests were conducted at room temperature (23°C) using distilled water. In each test, 5.0 g of Hastings, Nebraska #16 soil was suspended in 50.0 ml of distilled water. The resulting suspension was shaken for five minutes using a mechanical shaker and then centrifuged at high speed and filtered to obtain a clear filtrate. Each filtrate was analysed for phosphorus content using spectrophotometry. Results are shown in Table 2, below.

TABLE 2

Effect of AA/AMPS Concentration on Phosphate Leaching
From Soil #1 (Hastings, Nebraska #16)
5.0 g of Soil in 50.0 ml of Distilled Water

| Example No. | $PO_4^{3-}$ Added As mg/L 'P' | AA/AMPS Added 'Active' mg/L | $PO_4^{3-}$ Leach As mg/L 'P' | % Increase in P Contents | pH |
|---|---|---|---|---|---|
| 10 | 0 | 0 | 0.50 | — | 6.8 |
| 11 | 0 | 50 | 0.56 | 12 | 6.6 |
| 12 | 0 | 100 | 0.68 | 36 | 6.7 |
| 13 | 0.03 | 0 | 0.50 | — | 6.8 |
| 14 | 0.03 | 50 | 0.93 | 86 | 6.8 |
| 15 | 0.03 | 100 | 0.91 | 82 | 6.8 |
| 16 | 0.30 | 0 | 0.60 | — | 6.8 |
| 17 | 0.30 | 50 | 0.85 | 42 | 6.7 |
| 18 | 0.30 | 100 | 0.83 | 38 | 6.7 |
| 19 | 0.30 | 0 | 2.35 | — | 6.7 |
| 20 | 3.0 | 50 | 2.60 | 11 | 6.7 |
| 21 | 3.0 | 100 | 2.60 | 11 | 6.7 |

The effect of AA/AMPS concentration on phosphate leaching from Hastings, Nebraska #16 soil is shown in Table 2. These examples show four different concentrations of added phosphate and three different concentrations of AA/AMPS. The addition of AA/AMPS improved the phosphorus availability in solution by over 80% for 0.03 mg/L added phosphorus from ammonium phosphate. However, as the amount of added phosphorous increased to 3.0 mg/L, the improvement over blank fell to 11%. This behavior is quite normal based on precipitation-equilibrium solubility and threshold-inhibition mechanisms.

*Examples 22-24*

In these examples, four soils having varying sand, silt, clay contents and phosphate adsorption capacities were evaluated for phosphate release. The results are shown in Table 3, below.

TABLE 3

Phosphate Leaching from Different Soils Treated
With AA/AMPS and 3.0 mg/L (as 'P') $PO_4^{3-}$

| Concentration of AA/AMPS, Active (mg/L) | Amount of Phosphate Leaching as mg/L 'P' | | | |
|---|---|---|---|---|
| | Hastings, Neb. #16 Soil #1 | Hagerstown, PA #21-22 Soil #2 | Parcolet SC #23 Soil #3 | Davidson, VA #25 Soil #4 |
| 0 | 2.35 | 1.92 | 2.23 | 0.05 |
| 50 | 2.60 | 2.23 | 2.28 | 0.13 |
| 100 | 2.60 | 2.38 | 2.46 | 0.15 |
| % Increase | 11 | 24 | 10 | 200 |

Table 3 shows that soil #4 (Davidson, Virginia #25) releases the least amount of phosphorous into the aqueous solutions. However, 50-100 ppm of AA/AMPS enhances its phosphorous release by almost 200%. All other soils also responded to the AA/AMPS addition by releasing 10-25% higher amounts of phosphorus into the aqueous solution.

*Examples 25-29*

In these examples, various scale inhibitors were evaluated as phosphate leaching aids, using Hastings, Nebraska No. 16 and Davidson, Virginia No. 25 soils (Soils Nos. 1 and 4 in Table 3 above). Results are shown in Table 4, below.

## TABLE 4

Phosphate Leaching with Different Additives at 50 mg/L,
In Presence of 30 mg/L (as 'P') $PO_4^{3-}$

| Example | Additive | Amount of Phosphate Leaching as mg/L'P' | |
|---|---|---|---|
| | | Soil No. 1 | Soil No. 4 |
| 25 | Blank | 2.35 | 0.05 |
| 26 | AA/AMPS | 2.60 | 0.13 |
| 27 | PAA[1] | 2.57 | 0.13 |
| 28 | AA/AMPS/APEO[2] 60/20/20 | 2.45 | 0.10 |
| 29 | AA/AMPS/HEM5[3] | 2.45 | 0.09 |

Table 4 shows that polyacrylic acid and terpolymers containing acrylic acid, 2-acrylamido--2-methylpropylsulphonic acid and polyethylene oxides aid in leaching phosphate from soil to an aqueous solution.

[1] PAA = polyacrylic acid, having a molecular weight of approximately 4700 as determined by light scattering.

[2] AA/AMPS/APEO = terpolymer of acrylic acid, 2-acrylamido-2-methylpropyl sulphonic acid and allyl polyethylene oxide having a molecular weight of approximately 5000-10,000, as determined by intrinsic viscosity. The monomer ratio, by weight, is 60/20/20. APEO is commercially available from Union Carbide Corporation.

[3] AA/AMPS/HEM5 = terpolymer of acrylic acid, 2-acrylamido-2-methylpropyl sulphonic acid and polyethylene glycol mono methacrylate, having a molecular weight of approximately 5,000-10,000, as determined by intrinsic viscosity. The monomer ratio, by weight, is 60/20/20. HEM5 is commercially available from Alcolac Corporation.

## Claims

1. A method of enhancing the efficacy of a phosphate fertilizer and increasing the availability of other soil nutrients, comprising adding to the fertilizer one or more of the following scale-inhibiting compounds, viz. Polyacrylic acid, polymers comprising acrylic acid and 2-acrylamido-2-methylpropylsulphonic acid (AMPS) or 2-methacrylamido-2-methylpropyl-sulphonic acid (MAMPS), polymers comprising methacrylic acid and AMPS or MAMPS, polymers comprising acrylic acid and a hydroxyalkyl acrylate and polymers comprising methacrylic acid and a hydroxyalkyl acrylate.

2. A method of enhancing the efficacy of a phosphate fertilizer and increasing the availability of other soil nutrients, comprising adding to soil one or more scale-inhibiting agents as defined in Claim I either separately from or concurrently with addition of the fertilizer to the soil.

3. A method of improving the growth of plants comprising adding to the soil in which the plants are growing, separately or in combination, a phosphate fertilizer and a scale-inhibiting compound as defined in Claim 1.

4. A method as claimed in Claim 1, 2 or 3, in which the ratio of fertilizer to scale-inhibiting compound is 1:1000 to 1000:1, by weight.

5. A method as claimed in any preceding claim, in which the phosphate fertilizer is an apatite, tricalcium phosphate, dicalcium phosphate, mono calcium phosphate, an iron phosphate, an aluminium phosphate, an orthophosphate, a nitrophosphate, ortophosphoric acid or an inorganic polyphosphate.

6. An improved fertilizing composition, comprising a phosphate fertilizer and a scale-inhibiting compound as defined in Claim 1.

7. A composition as claimed in Claim 6, in which the fertilizer is as defined in Claim 5.

8. A composition as claimed in Claim 6 or 7, in which the ratio of fertilizer to scale-inhibiting compound is from 1:1000 to 1000:1, by weight.

9. A composition as claimed in any one of Claims 6 to 8 for use in application to the soil for enhancing the growth of plants.

## Patentansprüche

1. Ein Verfahren zur Erhöhung der Wirksamkeit eines Phosphatdüngers und zur Steigerung der Verfügbarkeit anderer Bodennährstoffe, umfassend das Zusetzen einer oder mehrerer der folgenden Kesselstein-hemmenden Verbindungen zu dem Dünger, nämlich Polyacrylsäure, Polymere, die Acrylsäure und 2-Acrylamido-2-methylpropylsulfonsäure (AMPS) oder 2-Methacrylamido-2-methylpropylsulfonsäure (MAMPS) enthalten, Polymere, die Methacrylsäure und AMPS oder MAMPS enthalten, Polymere, die Acrylsäure und ein Hydroxyalkylacrylat enthalten, und Polymere, die Methacrylsäure und ein Hydroxyalkylacrylat enthalten.

2. Ein Verfahren zur Erhöhung der Wirksamkeit eines Phosphatdüngers und zur Steigerung der Verfügbarkeit anderer Bodennährstoffe, umfassend das Zugeben eines oder mehrerer Kesselstein-hemmender Mittel, wie sie in Anspruch 1 definiert sind, zum Boden, u.zw. entweder gesondert von der Zugabe des Düngers zum Boden oder gleichzeitig damit.

3. Ein Verfahren zur Verbesserung ders Pflanzenwachstums, umfassend das Zugeben eines Phosphatdüngers und einer Kesselstein-hemmenden Verbindung, wie in Anspruch 1 definiert, gesondert oder in Kombination, zu dem Boden, in welchem die Pflanzen wachsen.

4. Ein Verfahren wie in Anspruch 1, 2 oder 3 beansprucht, wobei das Verhältnis von Dünger zu Kesselstein-hemmender Verbindung, bezogen auf das Gewicht, 1:1000 bis 1000:1 beträgt.

5. Ein Verfahren wie in einem der vorhergehenden Ansprüche beansprucht, wobei der Phosphatdünger ein Apatit, Tricalciumphosphat, Dicalciumphosphat, Monocalciumphosphat, ein Eisenphosphat, ein Aluminiumphosphat, ein Orthophosphat, ein Nitrophosphat, Orthophosphorsäure oder ein anorganisches Polyphosphat ist.

6. Eine verbesserte Düngerzusammensetzung, enthaltend einen Phosphatdünger und eine Kesselstein-hemmende Verbindung, wie in Anspruch 1 definiert.

7. Eine Zusammensetzung wie in Anspruch 6 beansprucht, wobei der Dünger wie in Anspruch 5 definiert ist.

8. Eine Zusammensetzung wie in Anspruch 6 oder 7 beansprucht, wobei das Verhältnis von Dünger zu Kesselstein-hemmender Verbindung, bezogen auf das Gewicht, 1:1000 bis 1000:1 beträgt.

9. Eine Zusammensetzung wie in einem der Ansprüche 6 bis 8 beansprucht, zur Verwendung für das Aufbringen auf den Boden zur Erhöhung des Pflanzenwachstums.

## Revendications

1. Procédé pour augmenter l'efficacité d'un engrais phosphaté et pour accroître l'accessibilité aux autres produits nutritifs du sol, qui comprend l'addition à l'engrais d'un ou plusieurs des composés inhibiteurs de tartre suivants, c'est-à-dire l'acide polyacrylique, des polymères comprenant l'acide acrylique et l'acide 2-acrylamido-2-méthylpropylsulfonique (AMPS) ou l'acide 2-métacrylamido-2-méthylpropylsulfonique (MAMPS), des polymères comprenant l'acide méthacrylique et AMPS ou MAMPS, des polymères comprenant l'acide acrylique et un acrylate d'hydroxylalkyle et des polymères comprenant l'acide méthacrylique et un acrylate d'hydroxylalkyle.

2. Procédé pour augmenter l'efficacité d'un engrais phosphaté et pour accroître l'accessibilité aux autres produits nutritifs du sol, qui comprend l'addition au sol d'un ou plusieurs agents inhibiteurs de tartre comme ils sont définis dans la revendication 1, soit séparément, soit simultanément à l'addition d'engrais au sol.

3. Procédé pour stimuler la croissance de plantes qui comprend l'addition au sol dans lequel poussent les plantes, séparément ou en combinaison, d'un engrais phosphaté et d'un composé inhibiteur de tartre comme défini dans la revendication 1.

4. Procédé selon la revendication 1, 2 ou 3, dans lequel le rapport engrais - agent inhibiteurs est de 1:1000 à 1000:1 en poids.

5. Procédé selon l'une quelconque des revendications précédentes, dans lequel l'engrais phosphaté est une apatite, un phosphate tricalcique, un phosphate dicalcique, un phosphate monocalcique, un phosphate de fer, un phosphate d'aluminium, un orthophosphate, un nitrophosphate, l'acide orthophosphorique ou un polyphosphate minéral.

6. Composition fertilisante améliorée, qui comprend un engrais phosphaté et un composé inhibiteur de tartre selon la revendication 1.

7. Composition selon la revendication 6, dans laquelle l'engrais est selon la revendication 5.

8. Composition selon la revendication 6 ou 7, dans laquelle le rapport engrais - composé inhibiteur de tartre est de 1:1000 à 1000:1, en poids.

9. Composition selon l'une quelconque des revendications 6 à 8, destinée à être utilisée comme application dans le sol pour stimuler la croissance de plantes.